# EUROPEAN PATENT APPLICATION

(11) **EP 2 371 442 A1**
(43) Date of publication of application: **05.10.2011**
(21) Application number: 09828767.5
(22) Date of filing: 19.10.2009
(51) Int. Cl.: B01D 53/04, B01D 53/02, B01J 20/28, B01J 20/34

(54) **ADSORPTION MOLDED BODY, ADSORPTION AND RECOVERY TREATMENT APPARATUS, AND METHOD FOR DESORPING ADSORBED SUBSTANCE**

(30) Priority: 28.11.2008 JP 2008304212
(71) Applicant: Daikin Industries, Ltd., Osaka 530-8323 (JP)
(72) Inventor: YAMASHITA, Kiminari, Settsu-shi Osaka 566-8585 (JP); UTAKA, Yukihiro, Kusatsu-shi Shiga 525-8526 (JP); SAITOU, Aiko, Tokyo 2060033 (JP); NAGANO, Yoshinobu, Ibaraki 3050031 (JP); KAMETANI, Keiichirou, Settsu-shi Osaka 566-8585 (JP)
(74) Representative: Siegert, Georg
(86) International application number: PCT/JP2009/005453
(87) International publication number: WO 2010/061517

(57) **Abstract**

An object of the present invention is to provide an adsorbing molded body wherein, in an ohmic heating type adsorption recovery treatment apparatus, the size of the adsorption recovery treatment apparatus is prevented from increasing, the amount adsorbed per unit of volume can be prevented from decreasing, and a special electrode with a low contact resistance is no longer needed; moreover, in an electromagnetic wave heating type adsorption recovery treatment apparatus, local heating and spark discharges can be prevented from occurring. An adsorbing molded body according to the present invention is an adsorbing molded body, which is subject to ohmic heating or electromagnetic wave heating, that includes: an electrically conductive powder adsorbent; an insulating powder adsorbent; and an inorganic binder. The inorganic binder binds the powder adsorbents together, namely, the inorganic binder binds together the above described two types of powder adsorbents. Furthermore, such an adsorbing molded body is obtained by mixing the insulating powder adsorbent together with the inorganic binder into an electrically conductive powder adsorbent, subsequently forming and drying the mixture, and, furthermore., calcining the mixture as needed.

## Description

### TECHNICAL FIELD

The present invention relates to an adsorbing molded body (e.g., a honeycomb, a foam body, a granular molded body, and the like) that is suited to ohmic heating, microwave heating. In addition, the present invention relates to an adsorption recovery treatment apparatus wherein the abovementioned adsorbing molded body is used. In addition, the present invention relates to a method of desorbing from the adsorbing molded body an adsorbate that has been adsorbed to that adsorbing molded body.

### BACKGROUND ART

In a gas adsorption recovery treatment apparatus, wherein the gas contains a volatile organic compound (hereinbelow, called a "VOC") such as an organic solvent, when an adsorbent is regenerated by desorbing the VOC from the adsorbent, a method (hereinbelow, called a "water vapor heating method") is usually employed wherein the adsorbent is heated by water vapor (e.g., refer to Patent Document 1, namely, Japanese Unexamined Patent Application Publication No. 2007-326765). However, in the water vapor heating method, during adsorbent regeneration, the thermal energy expended to heat the adsorbent to the temperature needed to desorb the VOC from the adsorbent is significantly greater than the thermal energy that is actually needed to desorb the VOC from the adsorbent at the temperature. Consequently, in the water vapor heating method, a large amount of water vapor, namely, five to ten times that of the VOC, is needed; furthermore, during adsorbent regeneration, a large amount of condensed water is recovered together with the VOC. Furthermore, because this condensed water contains the VOC, it cannot be discharged as is. Consequently, a water vapor heating type adsorption recovery treatment apparatus inevitably necessitates a wastewater treatment apparatus. Accordingly, the water vapor heating type adsorption recovery treatment apparatus requires a huge equipment cost and maintenance cost.

To solve such problems with the water vapor heating method, methods are known wherein the adsorbent is heated without using water vapor; of particular note are a method (hereinbelow, called an "ohmic heating method") wherein the adsorbent is heated directly by the electrical resistance of the adsorbent when electrical current is passed through the adsorbent and a method (hereinbelow, called an "electromagnetic wave heating method") wherein the adsorbent is heated directly by radiating the adsorbent with microwaves.

Furthermore, in an ohmic heating type adsorption recovery treatment apparatus, fibrous activated charcoal is in most cases used as the adsorbent, which is the object to undergo ohmic heating (e.g., refer to Patent Document 2, namely, Japanese Unexamined Patent Application Publication No. 2002-224562). Nevertheless, the bulk density of fibrous activated charcoal is small, namely, 0.05 g/cm³. Consequently, compared with powder activated charcoal, the amount of fibrous activated charcoal adsorbed per unit of volume is small. Accordingly, if fibrous activated charcoal is used as the adsorbent in an ohmic heating type adsorption recovery treatment apparatus, then the size of the adsorption recovery treatment apparatus increases unavoidably.

In contrast, in an activated charcoal honeycomb molded body (e.g., refer to Patent Document 3, namely, Japanese Unexamined Patent Application Publication No. H05-31322), the bulk density is comparatively large, namely, 0.25 g/cm³, and the amount adsorbed per unit of volume compared with fibrous activated charcoal is also large. Consequently, an adsorption recovery treatment apparatus wherein an activated charcoal honeycomb molded body is used as the adsorbent is of a smaller size than the case wherein fibrous activated charcoal is used as the adsorbent. Nevertheless, activated charcoal is a good conductor and has a small electrical resistance. Consequently, in an activated charcoal honeycomb molded body wherein the activated charcoal density is high, electrical resistance is extremely small. Accordingly, to ohmically heat the activated charcoal honeycomb molded body, the contact resistance between the electrode and the activated charcoal honeycomb molded body must be reduced sufficiently. However, the current state of affairs is that forming such an electrode is extremely troublesome.

In addition, although the bulk density of granular activated charcoal is comparatively large, namely, 0.5 g/cm³, the state of contact with granular activated charcoal is unstable, and consequently stable ohmic heating is difficult to achieve.

In addition, if heating is accomplished by the electromagnetic wave heating method when the activated charcoal honeycomb molded body, the granular activated charcoal, or the like is regenerated in the adsorption recovery treatment apparatus, then the permittivity of the activated charcoal will be large, which will tend to cause local heating. In addition, because the state of contact with the granular activated charcoal is unstable, spark discharges will tend to occur if electromagnetic wave heating is performed. Consequently, heating the activated charcoal honeycomb molded body, the granular activated charcoal, or the like using the electromagnetic wave heating method is not an option.

### SUMMARY OF THE INVENTION

### <Technical Problem>

An object of the present invention is to provide an adsorbing molded body, an adsorption recovery treatment apparatus, and an adsorbate desorbing method wherein, in an ohmic heating type adsorption recovery treatment apparatus, the size of the adsorption recovery treatment apparatus can be prevented from increasing, the amount adsorbed per unit of volume can be prevented from decreasing, and a special electrode with a low contact resistance is no longer needed; moreover, in an electromagnetic wave heating type adsorption recovery treatment apparatus, local heating and spark discharges can be prevented from occurring.

### <Solution to Problem>

An adsorbing molded body according to a first aspect of the present invention is an adsorbing molded body, which is subject to ohmic heating or electromagnetic wave heating, that comprises: an electrically conductive powder adsorbent; an insulating powder adsorbent; and an inorganic binder. Furthermore, the "adsorbing molded body" referred to herein is, for example, a honeycomb molded body, a foam molded body (i.e., a porous molded body), a granular molded body, or the like. In addition, the "electrically conductive powder adsorbent" referred to herein is, for example, an activated charcoal powder or the like. In addition, the "insulating powder adsorbent" referred to herein is a powder, such as zeolite, silica gel, activated alumina, or the like. The inorganic binder binds the powder adsorbents together, namely, the inorganic binder binds together the powder adsorbents in the mixture of the above described two types of powder adsorbents. Furthermore, the "inorganic binder" referred to herein is, for example, colloidal silica, colloidal alumina, glass frit, water-glass, sepiolite, or the like.

Furthermore, such an adsorbing molded body is obtained by mixing the insulating powder adsorbent together with the inorganic binder into an electrically conductive powder adsorbing material, subsequently forming and drying the mixture, and, furthermore, calcining the mixture as needed (at a temperature equal to or less than 500°C).

An adsorbing molded body according to a second aspect of the present invention is the adsorbing molded body according to the first aspect of the invention, wherein the adsorbing molded body has a honeycomb structure.

An adsorbing molded body according to a third aspect of the invention is the adsorbing molded body according to the first aspect of the invention, wherein the adsorbing molded body is a foam body.

An adsorbing molded body according to a fourth aspect of the present invention is the adsorbing molded body according to the first aspect of the invention, wherein the adsorbing molded body is granular.

An adsorption recovery treatment apparatus according to a fifth aspect of the present invention comprises the adsorbing molded body according to any one aspect of the first through third aspects and an ohmic heating unit. The ohmic heating unit ohmically heats the adsorbing molded body.

An adsorption recovery treatment apparatus according to a sixth aspect of the present invention comprises an adsorbing molded body and an electromagnetic wave heating unit. The adsorbing molded body is the adsorbing molded body according to any one aspect of the first through fourth aspects. The electromagnetic wave heating unit heats the adsorbing molded body using electromagnetic waves. Furthermore, the "electromagnetic waves" referred to herein are, for example, microwaves.

An adsorbate desorbing method according to a seventh aspect of the present invention comprises the step of: desorbing an adsorbate, which the adsorbing molded body according to any one aspect of the first through third aspects has adsorbed, from the adsorbing molded body by ohmically heating the adsorbing molded body.

An adsorbate desorbing method according to an eighth aspect of the present invention comprises the step of: desorbing an adsorbate, which the adsorbing molded body according to any one aspect of the first through fourth aspects has adsorbed, from the adsorbing molded body by heating the adsorbing molded body using electromagnetic waves.

### <advantageous Effects of Intention>

The adsorbing molded body according to the present invention contains an electrically conductive powder adsorbent and an insulating powder adsorbent. Consequently, in this adsorbing molded body, appropriately modifying the mixing ratio of the electrically conductive powder adsorbent and the insulating powder adsorbent makes it possible to maintain or improve, depending on the case, adsorption performance without any remarkable loss in adsorption performance and to flexibly control electrical characteristics, for example, electrical conductivity, permittivity, and the like. Accordingly, if these adsorbing molded bodies are used as the absorbent in the ohmic heating type adsorption recovery treatment apparatus, then an increase in the size of the adsorption recovery treatment apparatus and a decrease in the amount adsorbed per unit of volume can be prevented and providing a special electrode with a small contact resistance becomes unnecessary. In addition, if these adsorbing molded bodies are used as the adsorbent in the electromagnetic wave heating type absorption recovery treatment apparatus, then it is possible to prevent local heating and spark discharges from occurring.

In addition, if this adsorbing molded body is used as the adsorbent in a dehumidifying apparatus that supplies dry air and the like by adsorbing water vapor, then the adsorbent regeneration, system can be simplified, which makes it possible to make the dehumidifying apparatus more compact.

### DESCRIPTION OF EMBODIMENTS

### <Adsorbing molded body>

Examples of an adsorbing molded body according to the present embodiment include a honeycomb adsorbing molded body, a granular adsorbing molded body, and a foam adsorbing molded body. Each molded body is explained below.

### 1. Honeycomb Adsorbing molded body

### (1) Composition

A honeycomb adsorbing molded body according to an embodiment of the present invention is formed principally from 10-80 wt% of activated charcoal powder, 10-80 wt% of insulating adsorbent powder (e.g., any one of a powder of zeolite, silica gel, activated alumina or the like, or any combination thereof), and 5-30 wt% of binder (e.g., any one of colloidal silica, colloidal alumina, water-glass, sepiolite, epoxy or the like, or any combination thereof). Furthermore, the binder is preferably an inorganic binder such as colloidal silica, colloidal alumina, glass frit, water-glass, or sepiolite.

Note that, if the honeycomb adsorbing molded body according to the present embodiment is incorporated in an ohmic heating type adsorption recovery treatment apparatus, then it is preferable to adjust the resistance in a state wherein a suitable electrical conductivity is maintained by making the mixture amount of the activated charcoal powder somewhat larger than the mixture amount of the insulating adsorbent powder; furthermore, if the same honeycomb adsorbing molded body is incorporated in an electromagnetic wave heating type adsorption recovery treatment apparatus, then it is preferable to ensure that spark discharges do not occur by making the mixture amount of the activated charcoal powder somewhat smaller than the mixture amount of the insulating adsorbent powder.

### (2) Adsorption Performance

The adsorption performance of the honeycomb adsorbing molded body according to the present embodiment can be estimated easily based on the adsorption capacities of each of the activated charcoal powder and the insulating adsorbent powder as well as on the mixing ratio of the activated charcoal powder and the insulating adsorbent powder.

### (3) Manufacturing Method

First, the activated charcoal powder and the insulating adsorbent powder are mixed. Next, a kneaded product is prepared by adding the binder and a solvent (e.g., water or organic solvent or the like) to the mixed powder and then kneading together the mixed powder, the binder, and the solvent. Subsequently, the kneaded product is extruded through a mold into a honeycomb structure. Thereafter, the honeycomb molded body is dried. Furthermore, the dried honeycomb molded body is calcined in a furnace, whereupon the target honeycomb adsorbing molded body is obtained. Note that, the calcination temperature during calcination is less than 550°C, and preferably is equal to or less than 400°C.

### 2. Granular Adsorbing molded body

### (1) Composition

The composition is the same as that of the honeycomb adsorbing molded body.

### (2) Adsorption Performance

The adsorption performance is equal to that of the honeycomb adsorbing molded body.

### (3) Manufacturing Method

Other than the fact that the extrusion molding is a granular molding, the manufacturing method is the same as that of the honeycomb molded body.

### 3. Foam Adsorbing molded body

### (1) Composition

The composition is the same as that of the honeycomb adsorbing molded body.

### (2) Adsorption Performance

The adsorption performance is equal to that of the honeycomb adsorbing molded body.

### (3) Manufacturing Method

First, the activated charcoal powder and the insulating adsorbent powder are mixed. Next, a kneaded product is prepared by adding the binder and the solvent (e.g., water or organic solvent) to the mixed powder and then kneading together the mixed powder, the binder, and the solvent. Subsequently, a foam beads-containing kneaded product is prepared by mixing plastic beads, which are made of foamed polystyrene and the like, into the kneaded product. Furthermore, after the foam beads-containing kneaded product is molded into a desired shape, the molded body is dried. Furthermore, the dried molded body is calcined in a furnace or the plastic beads are extracted from the molded body using an organic solvent, and thereby the target foam adsorbing molded body is obtained.

### <Applications of the Honeycomb Adsorbing molded body, the Foam Adsorbing molded body, and the Granular Adsorbing molded body>

The honeycomb adsorbing molded body, the foam adsorbing molded body, and the granular adsorbing molded body according to the present embodiment can be installed in a publicly known or well-known ohmic heating type adsorption recovery treatment apparatus or electromagnetic wave heating type adsorption recovery treatment apparatus. Furthermore, the granular adsorbing molded body is provided for use in a state wherein it frills, for example, a vessel with good air permeability.

### <Features of the Honeycomb Adsorbing molded body, the Foam Adsorbing molded body, and the Granular Adsorbing molded body>

The adsorbing molded body according to the present embodiment contains activated charcoal powder and insulating adsorbent powder. Consequently, in this adsorbing molded body, appropriately modifying the mixing ratio of the activated charcoal powder and the insulating adsorbent powder makes it possible to maintain or improve, depending on the case, adsorption performance without any remarkable loss in adsorption performance and to flexibly control electrical conductivity and permittivity. Accordingly, if these adsorbing molded bodies are used as the adsorbent in the ohmic heating type adsorption recovery treatment apparatus, then an increase in the size of the adsorption recovery treatment apparatus and a decrease in the amount adsorbed per unit of volume can be prevented and the adjustment of the contact resistance with the electrode becomes unnecessary. In addition, if these adsorbing molded bodies are used as the adsorbent in the electromagnetic wave heating type adsorption recovery treatment apparatus, then it is possible to prevent spark discharges from occurring.

### Working Example 1

First, 40 wt% of activated charcoal powder and 40 wt% of zeolite powder were mixed. Next, a kneaded product was prepared by adding water and 20 wt% of inorganic binder to the mixed powder and then kneading together the mixed powder, the inorganic binder, and the water. Subsequently, this kneaded product was extruded through a mold into a honeycomb structure. Subsequently, the honeycomb molded body was dried. Furthermore, the dried honeycomb molded body was calcined in a kiln, whereupon the target honeycomb adsorbing molded body was obtained.

The electrical resistance of the honeycomb adsorbing molded body was 110 Ω.

Furthermore, in the honeycomb adsorbing molded body, the electrical resistance was sufficiently larger than the electrode contact resistance, which made ohmic heating possible.

### (Comparative Example 1)

An activated charcoal honeycomb molded body was prepared from 80 wt% of activated charcoal powder and 20 wt% of inorganic binder.

The electrical resistance of this activated charcoal honeycomb molded body was 1-2 Ω.

Furthermore, in this honeycomb activated charcoal molded body, the electrical resistance was equal to the electrode contact resistance, which made ohmic heating troublesome.

### INDUSTRIAL APPLICABILITY

In the adsorbing molded body according to the present invention, by appropriately modifying the mixing ratio of an electrically conductive powder adsorbent and an insulating powder adsorbent, it is possible both to maintain or improve, depending on the case, adsorption performance without any remarkable loss in adsorption performance and to flexibly control electrical characteristics, for example, electrical conductivity or permittivity; consequently, the adsorbing molded body according to the present invention is extremely useful as an adsorbent in, for example, at least one of an ohmic heating type adsorption recovery treatment apparatus and an electromagnetic wave heating type adsorption recovery treatment apparatus.

### CITATION LIST

### PATENT LITERATURE

**Patent Document 1**
   Japanese Unexamined Patent Application Publication No. 2007-326765
**Patent Document 2**
   Japanese Unexamined Patent Application Publication No. 2002-224562
**Patent Document 3**
   Japanese Unexamined Patent Application Publication No. H05-31322

## Claims

1. An adsorbing molded body, which is subject to ohmic heating or electromagnetic wave heating, comprising:
an electrically conductive powder adsorbent;
an insulating powder adsorbent; and
an inorganic binder that binds the powder adsorbents together.

2. An adsorbing molded body according to claim 1, wherein
the adsorbing molded body exhibits a honeycomb structure.

3. An adsorbing molded body according to claim 1, wherein
the adsorbing molded body is a foam body.

4. An adsorbing molded body according to claim 1, wherein
the adsorbing molded body is granular.

5. An adsorption recovery treatment apparatus, comprising:
the adsorbing molded body according to any of claim 1 through claim 3; and
an ohmic heating unit, which ohmically heats the adsorbing molded body.

6. An adsorption recovery treatment apparatus, comprising:
the adsorbing molded body according to any of claim 1 through claim 4; and
an electromagnetic wave heating unit, which heats the adsorbing molded body using electromagnetic waves.

7. An adsorbate desorbing method, comprising the step of:
desorbing an adsorbate, which the adsorbing molded body according to any of claim 1 through claim 3 has adsorbed, from the adsorbing molded body by ohmically heating the adsorbing molded body.

8. An adsorbate desorbing method, comprising the step of:
desorbing an adsorbate, which the adsorbing molded body according to any of claim 1 through claim 4 has adsorbed, from the adsorbing molded body by heating the adsorbing molded body using electromagnetic waves.
